# EUROPEAN PATENT APPLICATION

(11) **EP 4 468 112 A1**
(43) Date of publication of application: **27.11.2024**
(21) Application number: 23175764.2
(22) Date of filing: 26.05.2023
(51) Int. Cl.: G06F 1/20, G06F 1/18, G06N 10/40, H05K 1/02

(54) **HOUSING STRUCTURE OF A QUANTUM COMPUTING PROCESSOR AND MANUFACTURING METHOD THEREOF**

(71) Applicant: QuantWare Holding B.V., 2628 XG Delft (NL)
(72) Inventor: Alessandro, BRUNO, 2628 XG Delft (NL); Celeke, BUS, 2628 XG Delft (NL); Mohammad Habibullah, KHALID, 2628 XG Delft (NL)
(74) Representative: Hoyng Rokh Monegier B.V.

(57) **Abstract**

The present invention discloses a housing structure for a 3D quantum computing processor. The housing structure comprises one or multiple housing elements, wherein the one or multiple housing elements are made from a conductive material which is substantially rigid. The one or multiple housing elements form a cavity able to receive the 3D quantum computing processor. Furthermore, the housing structure comprises a filler material, applied to the one or multiple housing elements. The filler material is made from a conductive material which is solid and deformable at all operating temperatures of the 3D quantum computing processor, this being a temperature range ranging from cryogenic temperatures to at least room temperature. The filler material is able to at least partially fill the cavity, preferably by extrusion, and the filler material is thus able to mechanically connect the one or multiple housing elements with the 3D quantum computing processor.

## Description

### TECHNICAL FIELD

The present disclosure is generally directed to housing structures for quantum computing processors, specifically housing structures for 3D quantum computing processors and/or their related architectures.

### BACKGROUND

Quantum computing uses properties of quantum states, such as superposition, interference, and entanglement, to perform computational tasks by executing quantum algorithms. In some quantum computing architectures, these quantum algorithms are executed on quantum processors comprising superconducting qubits.

A qubit or quantum bit is one of the simplest quantum systems displaying the properties of quantum states, being a two-state (or two-level) quantum-mechanical system. The general quantum state of a qubit can be represented by a linear superposition of its two orthonormal basis states: 10) and 11).

Quantum coherence is a fundamental aspect of quantum systems that refers to the ability of a quantum system to maintain its quantum state over a period of time. Coherence is crucial in quantum computing as it enables the quantum system to successfully execute computations.

Due to the fragile nature of qubits, the quantum coherence of quantum systems can be easily destroyed. Any environmental interference in the quantum system usually produces what is known as decoherence, i.e., the loss of quantum coherence. Decoherence is irreversible and results in a loss of information since the qubits 'collapse' or fall out of a state of superposition which thus results in a loss of the wanted quantum state. These environmental interferences, known as noise, include the slightest variance in vibration, radiation, electromagnetic waves or temperature.

Different kinds of measures can be taken to reduce the influence of environmental interferences and thereby improve quantum coherence times. One approach is to improve the robustness of the quantum system, for instance through the design of topologically protected qubits. Another approach is improving the protection of the quantum system from these environmental interferences.

A measure taken to protect qubits from environmental interferences is to enclose the quantum processor in a housing. Such a housing may have several functions, such as facilitating a thermal link between the processor and the cooling system, providing electromagnetic shielding, isolating from vibrations, and connecting the quantum processor electrically to other components of the quantum computer.

Housings for planar quantum processors have been thoroughly studied and manufactured for several years. This planar processor technology generally relies on on-chip signal routing and lateral wire bonds at the chip-edge. Both these techniques form a bottleneck to scaling to large qubit numbers. For this reason, novel quantum processors often make use of the third dimension to promote scalability, resulting in 3D quantum processors.

A 3D quantum processor is a quantum processor that has at least (a part of) its one or more quantum computing circuit components extend in all three spatial dimensions. A 3D quantum processor architecture may rely on different types of technologies, such as flip-chip or interposers.

By allowing for scalability, these novel types of 3D quantum processor architectures form a solution to one of the major problems in superconducting quantum computing. As these new quantum processor architectures differ greatly from the current planar technology, this gives rise to additional challenges and requirements for the quantum processor architecture housing.

For example, a 3D architecture is generally more fragile than a 2D planar technology and will be more prone to misalignment and/or mechanical damage of the different components.

Most quantum computers operate at temperatures close to absolute zero (-273.15 degrees Celsius or 0 Kelvin), which requires specialized cooling systems. Typically, a combination of passive and active cooling methods is used to achieve this temperature.

Passive cooling techniques involve using materials with low thermal conductivity to minimize heat transfer into the system. For example, quantum computers may be enclosed in vacuum chambers or surrounded by layers of insulation to reduce heat transfer. Active cooling methods involve using cooling fluids or refrigerants to reduce the temperature further.

A thermal link between the housing and the quantum processor is necessary to transfer heat between the two components and maintain a stable temperature environment around the quantum processor during operation.

Heating up the quantum computer is typically not necessary during computing operation, but can be done for testing, calibration, repair, or removal purposes. In general, one wants to cool down the system, and then keep it cool for a considerable time. If a chip is damaged during the cooldown of the system, in the worst case one cannot perform any measurements using the chip or run any algorithms. The system will have to be reheated, so as to be repaired or removed.

In 2D architectures, the quantum processor is generally suspended in the 2D housing and kept in place by lateral wire bonds or by using mechanical clamps. Therefore, difference between expansion- and contraction rates of the housing and of the quantum computer form less of a problem due to larger tolerances. Cryogenic thermal pastes have been used in 2D architectures, allowing for efficient dissipation of heat. Preferably, one would not want to use thermal pastes near the quantum processor since they emit volatiles, corrupting the performance of the quantum processor.

A dominant source of mechanical damage and misalignment for 3D architectures is the difference between the expansion- and contraction rates of the housing itself and those of the quantum processor architecture the housing encloses during heating and cooling of the quantum computer.

Housings for quantum processors are often made from conductive material, such as copper, whereas the 3D quantum processor architecture is generally made from crystalline material, such as silicon or sapphire. These materials typically behave differently under temperature changes. For example, the system may need to be heated or cooled (so that the system can be switched between different temperature stages), and the materials of which the housing and the quantum processors are made typically contract and expand at different rates.

One possible effect of this difference in contraction and/or expansion rate is mechanical damage to, for example, the quantum processor, such as cracks or the breakage of fragile parts. This in turn can for instance result in defective transmission lines or other malfunctioning components, thereby limiting the performance of the system.

Another effect of such a difference in contraction and/or expansion rates is that different parts of the 3D quantum processor architecture may shift when cooling or heating the system. This relative movement can lead to misalignment between these parts, resulting in issues with transmission and crosstalk.

In the case of 2D planar processor housings, lateral wire bonds generally not only serve as an electrical connection, but also keep the processor in place and provide a thermal link with the housing. In case of a housing for a scalable 3D quantum processor architecture however, lateral wire bonds cannot fulfil these roles as effectively since the quantum processor extends into a third dimension.

One possible way to prevent adverse effects listed above in 3D quantum processor architectures is by incorporating large tolerances between the quantum processor architecture and its housing, for instance by positioning the quantum processor architecture in such a way that it is not in physical contact with the housing during any temperature stage of the operation of a quantum computer. However, a solution like this causes other issues such as the loss of the thermal link between the quantum processor and the housing. This also causes mechanical instability of the system as a whole, since the quantum processor architecture is secured in fewer places.

### SUMMARY

To address the above discussed drawbacks of the prior art, the present inventors realized that simply applying known techniques for 2D planar quantum processor housings to 3D scalable architectures is generally not possible, since certain prevailing techniques for housings for 2D planar quantum processors are not applicable to 3D scalable architectures. New techniques suitable for 3D scalable architectures had therefore to be developed.

A housing structure for a 3D quantum computing processor is accordingly disclosed, according to a first aspect of the disclosure. The housing structure may comprise one or multiple housing elements, wherein the one or multiple housing elements may be made from a conductive material which is substantially rigid. The one or multiple housing elements may form a cavity able to receive the 3D quantum computing processor.

The housing structure may further comprise a filler material, applied to the one or multiple housing elements. The filler material may be made from a conductive material which is solid and deformable at all operating temperatures of the 3D quantum computing processor. The operating temperatures are a temperature range ranging from cryogenic temperatures to at least room temperature. This means that the filler material must maintain a certain amount of deformability over this entire temperature range. The amount of deformability that the filler material needs to have may be constant over the entire temperature range. However, it may be also possible that the amount of deformability that the filler material needs to have may vary over the entire temperature range. For example, in temperature ranges where the difference in expansion and/or contraction rates between the different materials is smaller, a lesser amount of deformability may be required. In temperature ranges where the difference in expansion and/or contraction rates between the different materials is larger, a higher amount of deformability may be required. The deformability may for example be quantified by measuring the amount of plasticity and/or elasticity, although other measurement methods may be employed as well.

The filler material may be able to at least partially fill the cavity, preferably by extrusion. In this way the filler material may be extruded into the cavity and thus fill the cavity at least partially. The filler material is thus able to mechanically connect the one or multiple housing elements with the 3D quantum computing processor.

Since the filler material is deformable, it may act as a buffer between the housing structure and the quantum computing processor, which may expand and contract at different rates as mentioned above. In this way, the filler material may be deformed, and no mechanical stress that can damage the quantum computing processor is generated when e.g., cooling the system down to cryogenic temperatures.

The one or multiple housing elements may form a cavity for receiving a 3D quantum computing processor. The housing elements may have or form supply ports for supplying filler material between the housing elements and the 3D quantum computing processor. The filler material may thus act as a buffer between the housing elements and the 3D quantum computing processor, essentially mechanically connecting the two elements without endangering the 3D quantum computing processor from getting damaged by mechanical stress caused by the different expansion and contraction rates. The supply ports may for example be extrusion ports.

In an embodiment of the first aspect, the filler material is deformable in such a way that the filler material remains solid but is able to relieve mechanical stress through plastic deformation without fracturing. This may cause the filler material to act as a buffer between the housing structure and the 3D quantum computing processor, protecting the latter from the different rates of expansion and contraction between the 3D quantum computing processor and the housing structure.

In an embodiment of the first aspect, the conductive material out of which the one or multiple housing elements and/or the filler material is made may be thermally and/or electrically conductive. The thermal conductivity may aid e.g., in removing thermal energy from the 3D quantum computing processor. The electrical conductivity may aid e.g., in grounding the 3D quantum computing processor.

In an embodiment of the first aspect, the filler material may be deformable at all operating temperatures of the housing structure, this being a temperature range ranging from cryogenic temperatures to at least room temperature.

In an embodiment of the first aspect, the filler material may function as a solder between the housing elements of the housing structure and the 3D quantum computing processor.

In an embodiment of the first aspect, the filler material may mechanically support the 3D quantum processor when it is positioned in the housing structure.

In an embodiment of the first aspect, the filler material may prevent misalignment between the one or multiple housing elements and the 3D quantum computing processor by keeping their relative positions substantially constant during heating up or cooling down, for example because of the cohesion or fixation between the 3D quantum computing processor and the filler material on the one end, and the cohesion or fixation between the housing structure and the filler material on the other end.

In an embodiment of the first aspect, the filler material may comprise a metal, preferably indium, gallium, or alloys thereof. The filler material may be pure indium.

In an embodiment of the first aspect, the filler material may be deformable such that when the housing elements expand or contract when changing the operating temperature the 3D quantum computing processor remains connected to the one or multiple housing elements via the filler material.

In an embodiment of the first aspect, the filler material may be deformable such that the filler material keeps mechanical contact between the 3D quantum computing processor and the one or multiple housing elements without causing mechanical stress in the 3D quantum computing processor and the housing due to different shrinking rates of the 3D quantum computing processor and the one or multiple housing elements.

In an embodiment of the first aspect, when the 3D quantum computing processor is received in the cavity, the space between the one or multiple housing elements and the 3D quantum computing processor may be at least partially filled with the filler material, such that the filler material connects the 3D quantum computing processor and the one or multiple housing elements mechanically, thermally, and/or electrically.

In an embodiment of the first aspect, the material from which the one or multiple housing elements are made may comprise a metal, preferably copper or silver.

In an embodiment of the first aspect, the one or multiple housing elements are treated to improve their respective properties, preferably conductivity or protection from oxidation, for example by coating the metallic material with gold.

In an embodiment of the first aspect, the one or multiple housing elements form at least one extrusion port, from which the filler material may be extruded.

In an embodiment of the first aspect, the filler material is extruded such as to at least partially fill the cavity, preferably where the filler material is extruded by, in a first step, applying the filler material at least partially within or between the one or multiple housing elements, and, in a second step, by fastening one or multiple fixation elements, such as threads and/or screws, of the one or multiple housing elements. Preferably the filler material is provided in recesses in the side of the housing enclosure and is subsequently extruded from these recesses during assembly of the housing structure by the usage of the fixation elements which are inserted into the side of the housing enclosure.

In an embodiment of the first aspect, the housing structure may further comprise a base plane, wherein the base plane may be configured in such a way that when the 3D quantum computing processor is received in the cavity, the base plane is able to be mechanically, electrically and/or thermally connect to the 3D quantum computing processor through one or multiple connection elements.

In an embodiment of the first aspect, the connection elements may be electrically and/or thermally conductive, preferably wherein the connection elements are fuzz buttons and/or springs, more preferably wherein the connection elements are made from a deformable material.

In an embodiment of the first aspect, the base plane may be made of a conductive material and is substantially rigid.

In an embodiment of the first aspect, the base plane may comprise ridges wherein a seam is formed using a separate conductive material, preferably indium, such as to obtain a seam between the base plane and the one or multiple housing elements which is electromagnetically tight and/or able to release thermal stress.

In an embodiment of the first aspect, the housing structure may comprise a layer stack of multiple housing elements and filler material, preferably wherein the housing elements and the filler material in the layer stack alternate.

In this embodiment, the filler material of the layer stack may be extruded material, wherein the filler material may be extruded by pressing the layer stack together, preferably wherein the housing elements of the layer stack are pressed together by fixation elements, such as threads and/or screws. The filler material is then extruded into the cavity from in between the layer stack. In this way, the layer stack may form supply ports from which the filler material is supplied into the cavity, eventually contacting the 3D quantum computing processor. The layer stack may be inclined to make the filler material be extruded inwards into the cavity, instead of outwardly.

In an embodiment of the first aspect, the housing structure may further comprise bendable elements, also called wings, preferably wherein the bendable elements are protruding from the one or multiple housing elements, that connect mechanically, thermally and/or electrically to wave guides, such as a PCB, a flex PCB or flex cables. The one or more wave guides may be used to connect the 3D quantum computing processor to the up-chain components of the quantum computer.

In an embodiment of the first aspect, the housing structure may be configured to electromagnetically shield the 3D quantum computing processor received therein. Preferably, the housing structure acts as a Faraday cage.

In an embodiment of the first aspect, the housing structure may be configured to thermally connect the 3D quantum computing processor received therein to a cryostat.

According to a second aspect of the present disclosure, a 3D quantum computing processor system is disclosed. The 3D quantum computing processor system may comprise the housing structure according to the first aspect and a 3D quantum computing processor received in the cavity of the housing structure. The filler material may contact both the housing structure and the 3D quantum computing processor received therein. The filler material may be the main means, or even the only means, with which the 3D quantum computing processor is kept in place with respect to the housing structure.

According to a third aspect of the present disclosure, a method for assembling a housing structure for a 3D quantum computing processor is disclosed. The method may comprise providing one or multiple housing elements, wherein the one or multiple housing elements are made from a conductive material which is substantially rigid. Furthermore, the method may comprise providing a filler material, and applying the filler material to the one or multiple housing elements such that the filler material is provided at least partially within or between the one or multiple housing elements. The filler material may be made from a conductive material which is deformable at all operating temperatures of the 3D quantum computing processor, this being a temperature range ranging from cryogenic temperatures to at least room temperature.

The method may further comprise extruding the filler material from the one or multiple housing elements, preferably by using fixation elements. The fixation elements may for example be used to press multiple housing elements together, or for extruding the filler material from the one or multiple housing elements by pushing the fixation elements against the filler material.

The one or multiple housing elements may form a cavity which is able to receive the 3D quantum computing processor. The filler material may at least partially fill the cavity once the filler material is extruded or otherwise supplied and is thus able to connect the 3D quantum computing processor with the one or multiple housing elements.

In an embodiment of the third aspect, the filler material may be provided in recesses in the side of the housing enclosure and is subsequently extruded from these recesses during assembly of the housing structure by the usage of the fixation elements which are inserted into the side of the housing enclosure. These recesses thus form supply ports, in particular extrusion ports, from which the filler material may be extruded.

In an embodiment of the third aspect, the housing structure may comprise a layer stack of multiple housing elements and filler material. The filler material may be extruded by pressing the layer stack together, preferably by fastening the fixation elements that press the housing elements together.

In an embodiment of the third aspect, the method may further comprise providing a base plane and connecting the one or multiple housing elements to the base plane.

### BRIEF DESCRIPTION OF DRAWINGS

Embodiments will now be described, by way of example only, with reference to the accompanying schematic drawings in which corresponding reference symbols indicate corresponding parts, and in which:
FIG. 1 is a schematic diagram showing a dilution refrigerator in which the housing structure can be cooled so as to bring the quantum computing processor to its operating temperature, which is part of the state of the art;
FIGS. 2A-2B are schematic diagrams of a 2D quantum processor and a housing for a 2D quantum processor, namely FIG. 2A shows a quantum processor connected with wire bonds to a PCB, and FIG. 2B shows a housing in which a 2D quantum processor is positioned;
FIGS. 3A-3B are schematic diagrams showing a cross-sectional side view of a housing structure for a 3D quantum computing processor, with a 3D quantum computing processor provided therein, FIG. 3A shows a first method of forming the filler material, FIG. 3B shows the filler material making contact with the 3D quantum computing processor and the housing structure after the filler material is extruded;
FIG. 4A is a schematic diagram showing a base plane comprising a seam for the connection between the base plane and the one or multiple other housing elements, FIG. 4B further shows a waveguide for input of signals towards and output of signals from the quantum computing processor;
FIG. 5 is a schematic diagram showing the top view of housing structure for a quantum computing processor, with a quantum computing processor provided therein;
FIGS. 6A-6B are schematic diagrams showing a cross-sectional side view of a housing structure for a quantum computing processor, with a quantum computing processor provided therein, FIG. 6A shows a second method of forming the filler material different from the method used in the embodiment related to FIG. 3A, FIG. 6B shows the filler material making contact with the quantum computing processor and the housing structure after the filler material is extruded;
FIG. 7 is a schematic diagram showing a cross-sectional side view of a housing structure for a quantum computing processor, with a quantum computing processor provided therein and wherein furthermore connection elements are formed.

### DESCRIPTION OF EMBODIMENTS

Hereinafter, certain embodiments will be described in further detail. It should be appreciated, however, that these embodiments may not be construed as limiting the scope of protection for the present disclosure.

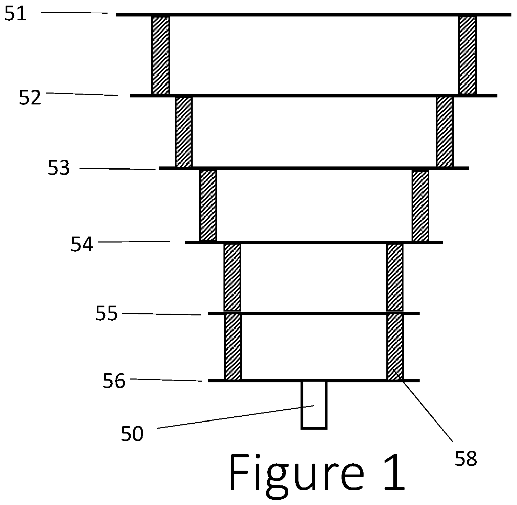

As mentioned before, most quantum computers operate at temperatures close to absolute zero (-273.15 degrees Celsius or 0 Kelvin), which requires specialized cooling systems. FIG. 1 is a schematic diagram that shows such an exemplary refrigerator in the form of a dilution refrigerator. The ultra-low temperatures that this refrigerator can achieve comes from the mixing of helium-3 (He-3) and helium-4 (He-4) isotopes. It involves a series of cooling stages that progressively lower the temperature until the desired low temperature is achieved.

In order to realize the very low temperatures the dilution refrigerator system is first precooled to a low enough temperature for helium to liquefy so the dilution process can be started. The first phase cooling the 60K Flange 52 and the second phase cooling the 4K Flange 53. The precooling can be done using conventional refrigeration techniques, such as a combination of mechanical coolers and/or liquid nitrogen. This initial precooling stage thus brings the system to temperatures around 4 Kelvin (K).

The next step involves the mixing chamber 56, which is the coldest part of the dilution refrigerator. It is usually a container that contains the mixture of isotopes of helium. The mixture is maintained at a temperature slightly above the desired target temperature (e.g., a few hundred millikelvin). Surrounding the mixing chamber 56 is a heat exchanger, which acts as an interface between the mixing chamber and the warmer stages 51-55 of the refrigerator. Connected to the heat exchanger is a condenser that contains pure helium-3, typically maintained at temperatures below 1 K. Helium-3 has a lower boiling point compared to helium-4, which allows it to act as a coolant for further cooling.

The dilution process begins by allowing a small amount of the mixture of helium isotopes from the mixing chamber to enter the helium-3 condenser. As the mixture flows, the helium-3 component condenses onto the surfaces of the condenser. After the helium-3 condensation, a heat pump is used to remove the thermal energy released during the condensation process and transfers the thermal energy to the warmer stages of the refrigerator.

Other techniques, such as adiabatic demagnetization, can also be used.

The dilution step, and other used methods can be repeated multiple times, progressively lowering the temperature. The cycle continues until the desired temperature for the sample holder 50 in the millikelvin range is reached. The sample holder 50 can for instance contain a quantum computing processor therein, operating at cryogenic temperatures. By utilizing this sequence of cooling stages, a dilution refrigerator can thus achieve the low temperatures required for e.g., quantum computing.

By dividing the dilution refrigerator into different parts at varying temperatures, a temperature gradient is established throughout the system. Different components of the dilution refrigerator generate heat during their operation. Separating these components into different parts at different temperatures helps manage and remove the generated heat effectively. Heat is transferred from the colder stages to the warmer stages through the heat exchangers, allowing for continuous cooling. Furthermore, the separation of the dilution refrigerator into different parts at different temperatures allows for the distribution of cooling power. The colder stages, such as the mixing chamber and the helium-3 condenser, are responsible for achieving and maintaining the low temperatures as mentioned above. The warmer stages, including the precooling stage and the heat exchangers, help remove heat and maintain the temperature gradient necessary for efficient operation.

The exemplary refrigerator comprises different chambers, where the temperature inside of the chambers decreases from top to bottom from room temperature to -10-20 mK. The chambers are separated by plates or flanges. The order of the different flanges/plates and their corresponding temperatures can be, for example the room temperature flange 51 at ∼300K, the 60K Flange 52 at ∼60K, the 4K Flange 53 at ∼4K, the Still Flange 54 at ~1K, the Cold Plate 55 at ~100mK, and the Mixing Chamber Flange 56 at ~10-20 mK. The different flanges are connected via fridge structures 58.

Because the dilution refrigerator system is operated at very low temperatures, it must be kept in a vacuum and shielded from the external environment. For this purpose, there is a housing covering the system, which is kept under a vacuum. Additionally, each of the different temperature stages are covered by a radiation shield preventing heat load by radiation from the warmer stages to the lower and colder stages. These measures are not only necessary for the cooling of the refrigerator system, but they also protect the quantum processor from environmental interferences when placed inside of the refrigerator system.

To take out the quantum processor after operation has been completed, one needs to gradually warm up the dilution refrigerator in a controlled manner. The warming process usually starts by gradually reducing the cooling power to the lowest temperature stages. Next, heat is transferred from the warmer stages of the dilution refrigerator to the colder stages using heat exchangers. The heat exchangers may be coupled with external heat sources, such as resistive heaters or heating coils, to provide additional heat input. The helium-3 condenser is warmed up in this manner as well. The heat causes the condensed helium-3 to evaporate back into the mixture.

Since the quantum computing processor comprised in the sample holder 50 undergoes this heating and cooling, bringing the quantum computing processor from room temperature to cryogenic temperatures and vice versa can cause mechanical damage and alignment issues due to the difference in contraction and/or expansion rate of the materials as mentioned above.

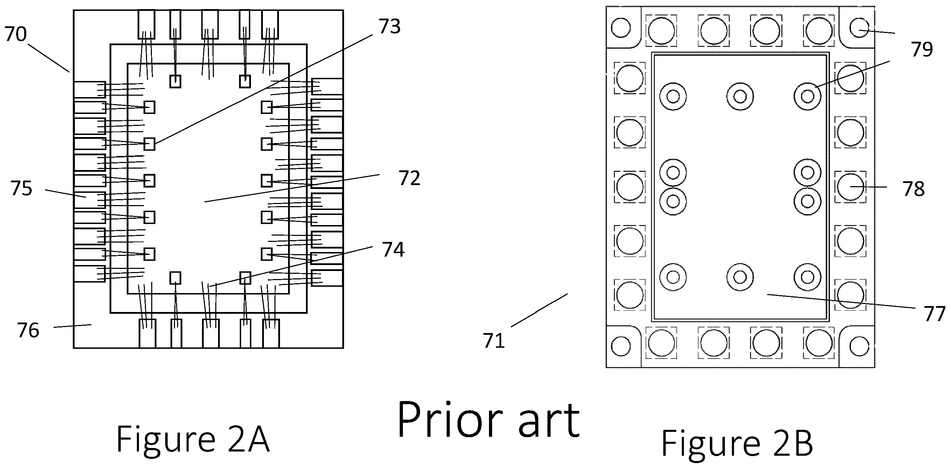

FIGS. 2A-2B are schematic diagrams of a 2D quantum processor and a housing for a 2D quantum processor, namely FIG. 2A shows a quantum processor connected with wire bonds to a PCB, and FIG. 2B shows a housing in which a 2D quantum processor is positioned.

The quantum processor 70 comprises a 2D quantum processor chip 72, having one or multiple qubits formed thereon. Several launchers 73 are formed along the edge of the area of the chip 72, which are connected using one or multiple wire bonds 74 to ports 75 on a PCB 76.

The housing 71 of the quantum processor 70 comprises a rigid housing element 77 forming a lid on the base plane, with the planar chip 72 formed in between. Connectors 78 connect the ports 75 of the PCB 76 with further elements provided up-chain. Screws 79 keep the housing 71 and the chip 70 in place with respect to each other.

The lateral wire bonds 74 generally not only serve as an electrical connection between the chip 72 and the PCB 76, but also keep the chip 72 in place during heating and cooling, and further provide a thermal link with the housing 71. Wire bonds are a planar technology, and as mentioned above such a technology does not in general scale to large qubit numbers. A considerable bottleneck to scaling up the number of qubits in a quantum processor is caused by spatial issues associated with the current two-dimensional quantum processor architectures.

Firstly, lateral wire bonds give rise to a lack of space at the chip-edge, as the chip edges scale linearly whereas the area for the placement of chip elements scales quadratically. Thus, as more qubits are implemented in a quantum processor, the surface area taken up by the chip elements increases faster than the perimeter of the chip, leading to situations where there is not enough space at the edges of the chip to accommodate wire bonding to all qubits. Secondly, the necessity of routing the waveguides to the edges of the chip lead to on-chip routing issues as the chip elements increase quadratically. Thirdly, up-chain fan-out of wires and other components also create spatial issues. Furthermore, increasing the number of qubits on a chip results in a higher power density and this will inevitably generate more heat. Qubits are extremely sensitive to their environment, and maintaining low temperatures, usually close to absolute zero, is crucial for their proper operation. Excessive heat can introduce errors and reduce the coherence time of qubits, impacting the overall performance of the quantum processor. Each wire bond occupies physical space on the chip and the PCB, but simply increasing the PCB size is also not a possibility, since will this lead to an increase in the overall size of the quantum computing system. This can pose challenges in terms of system integration and packaging.

As mentioned above, by allowing for scalability, 3D quantum processor architectures form a solution to the scalability problem in superconducting quantum computing.

As mentioned before, a 3D quantum processor is a quantum processor that has at least (a part of) its one or more quantum computing circuit components extend in all three spatial dimensions. The quantum computing circuit component can for example be a qubit, a photonic quantum circuit, and/or a chip element associated with a qubit or photonic quantum circuit, preferably control electronics, readout circuit, amplifiers, filters, and/or a transducer.

The qubit preferably comprises a superconducting qubit, a spin qubit, a trapped ion qubit, or a neutral atom qubit. The quantum computing circuit component may comprise a plurality of qubits, photonic quantum circuits, and associated chip elements. The 3D quantum processor can furthermore comprise one or multiple functional elements. A functional element is a circuit component which gets input from and/or sends output to the quantum computing circuit component. In other words, a functional element is a circuit component formed in the quantum computing apparatus so as to modify the input/output signal from the quantum computing circuit component, preferably a qubit. A functional element can comprise for example a low pass filter, an attenuator, a DC-block, an IR filter, a directional coupler, a circulator, and/or an amplifier.

An example of a 3D quantum processor can be found in International Application No. PCT/EP2023/053336, disclosing a quantum computing apparatus making use of a vertical interposer connected to a horizontal qubit plane together forming an exemplary 3D quantum processor.

As these new 3D quantum processor architectures differ greatly from the current planar technology, this gives rise to additional challenges and requirements for the housing for the quantum processor architecture.

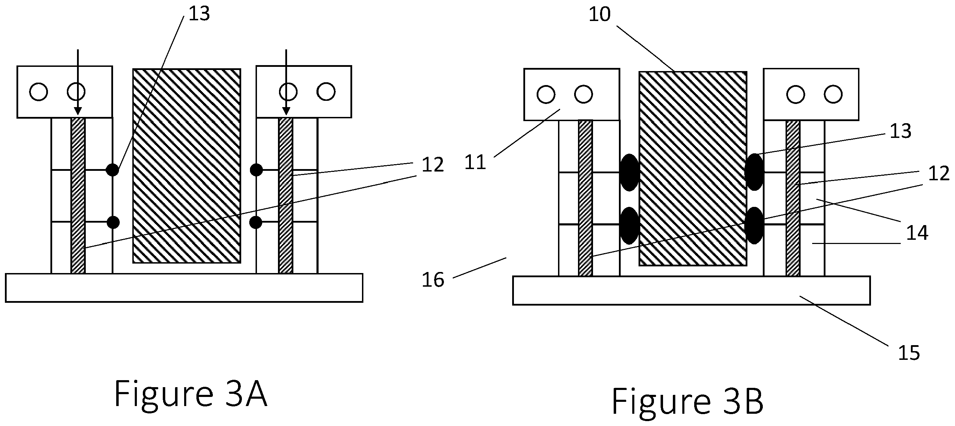

FIG. 3B is a schematic diagram showing a cross-sectional side view of a 3D housing structure 16 for a quantum computing processor. In this embodiment, a 3D quantum processor 10 is present in the housing structure 16.

The housing structure 16 comprises several housing elements 14 that create a cavity, in which the quantum processor 10 can be placed. This cavity can thus in general have an opening on one side, in this way also room is available for wave guides to and from the quantum computing processor. However, after the quantum computing processor has been received into the housing structure, further housing elements can be added to shield the quantum computing processor further if necessary. The housing structure 16 comprises a base plane 15, to which the other housing elements 14 are connected.

The housing elements can have a cubic-, cuboid-, plate-like-, L-, cylindrical-, and/or annular-shape, or any other shape suitable with which to make the cavity of the housing structure 16. The housing elements used to make the housing structure 16 do not have to have the same shape. The base plane 15 can also be considered a housing element 14. The housing structure 16 can be made from a single, integral housing element, i.e., made from one piece. For example, a single cylindrical-, cubic- or cuboid-shaped element can be used to make the cavity of the housing structure 16.

If multiple housing elements are used to form the housing structure 16, the different housing elements 14 can be connected to each other using bolts, screws, clamps, glue, welding, or soldering techniques.

The one or multiple housing elements 15 can be made from a conductive material which is substantially rigid. For example, the material can comprise a metal, preferably copper or silver. The one or multiple housing elements can be treated further to improve their properties, preferably conductivity or protection from oxidation, for example by coating the metallic material. A common coating used is a gold coating.

The base plane can also be made from a conductive material. Preferably, the material out of which the base plane is formed is the same as the rest of the housing element(s). This can avoid problems that would occur due to a difference in shrinking rates between the housing elements and the base plan. The base plane can be made substantially rigid.

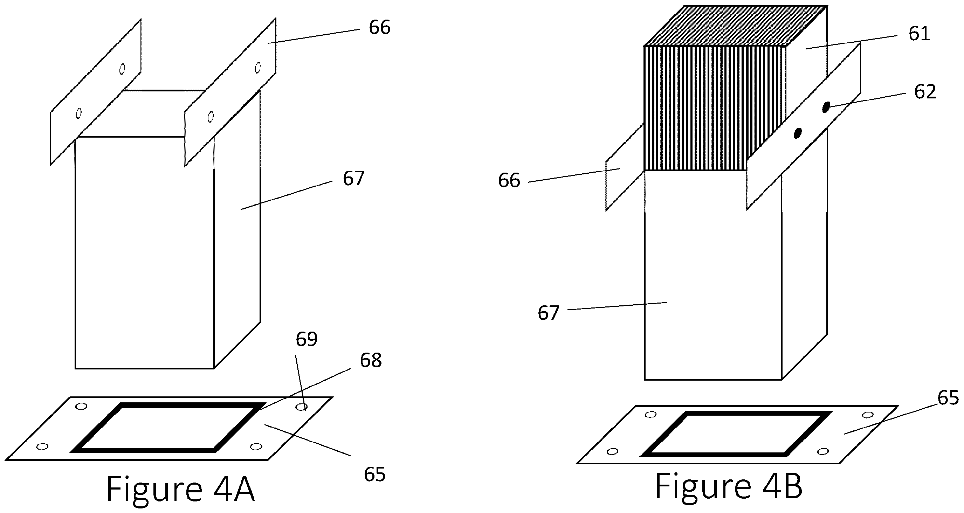

FIG. 4A is a schematic diagram showing a base plane comprising a seam for the connection between the base plane and the one or multiple other housing elements. In this preferred embodiment, the base plane comprises ridges wherein a seam is formed using a separate conductive material, preferably indium. In this way, a seam can be obtained between the base plane and the one or multiple other housing elements. This seam can thus help in making the housing structure to be electromagnetically tight. Furthermore, the seam can help to release thermal stress.

The base plane 65 comprises ridges that create a seam 68 for the connection between the base plane 65 and the one or multiple other housing elements 67. The base plane may comprise ridges in a square, rectangular, oval, or other shape, which create a seam 68 by using a separate conductive material, preferably indium. In this way, a seam 68 can be obtained between the base plane 65 and the one or multiple other housing elements 67. This seam 68 can thus help in making the housing structure 67 to be electromagnetically tight. Furthermore, the seam 68 can help to release thermal stress.

Furthermore, the base plane may comprise screw holes 69 through which screws can be formed to mount the base plane in the fridge 50, for example by mounting it to the sample holder 50. This provides a solid mounting.

Turning back to FIG. 3B, at the top of the housing structure wings, can be formed which are also part of the housing structure 16. The wings 11 can protrude in horizontal and/or vertical direction from the rest of the housing structure. These wings can connect mechanically, thermally and/or electrically to the up-chain components of a quantum computer, such as a PCB or a flex cable structure. Furthermore, the wings can be used to mount the housing structure within the fridge, although the mounting via the base plane is generally preferred.

The upper connection elements can be attached with screws 12, but other connection methods can also be used, such as bolts, clamps, glue, or soldering techniques.

FIG. 4B further shows a wave guide for input of signals towards and output of signals from the quantum computing processor, in particular showing a side view of a housing structure 67 for a quantum computing processor, wherein waveguides 61 are connected to the quantum processor. The waveguides come out of the cavity and mechanically, thermally and/or electrically connect the quantum processor to up-chain components of a quantum computer. The waveguides can be in the form of PCBs, spacers, flex PCBs, flex cables among others. By fastening fixation elements of the bendable wings 66, screws 62 in this embodiment, the waveguides 61 can be clamped together. The wings 66 can be made bendable, to promote this clamping mechanism. In this way the waveguides 61 can perform more optimally. The wings 66 keep the housing structure and/or the quantum processor in its place, and by making the wings 66 bendable no mechanical forces are exerted on the quantum architecture during heating or cooling of the fridge, so less mechanical force are exerted on the quantum processor. To make the wings 66 bendable, they can for example be made from a thinner layer of material than what the one or multiple housing elements of the housing structure are made of.

Turning back to FIG. 3B, on the side of the housing elements 14 facing the quantum processor 10 a filler material is formed, such that the filler material 13 (at least partially) fills the cavity formed by the housing structure 16. The filler material 13, in this way, is able to connect the quantum computing processor 10 received in the housing structure with the housing structure 16 (for example and more specifically the one or multiple housing elements 14) mechanically, thermally, and/or electrically.

The housing structure can for example comprise a layer stack of multiple housing elements, and filler material, preferably the housing elements and the filler material in the layer stack can alternate. Another option is that the filler material is provided in small ridges of openings on the side of the one or more housing elements facing the cavity. Another option is that the filler material is provided in holes formed inside the one or more housing elements facing the cavity, preferably having an opening on the other side as well for pushing elements, for example screws, to be present. The filler material initially will not be formed as to connect with the quantum processor before the filler material extrusion, but will be extruded in a specific way so as to make contact with the quantum computing processor.

The filler material 13 is special in that it is a solid, conductive material and deformable at all operating temperatures of the quantum processor 10, comprising both cryogenic temperatures, room temperature and all temperatures in between. In general, the operating temperature of the quantum processor 10 all are temperatures that the quantum processor will be subjected to during its lifetime.

The filler material 13 is deformable in such a way that it remains solid under all temperatures it is subjected (both during operation of the quantum computer at cryogenic temperatures, but also when replacing the quantum computing processor or altering the quantum computing processor at room temperature), but is able to relieve mechanical stress through plastic deformation without fracturing.

The filler material 13 needs to be deformable at all operating temperatures such that it keeps mechanical, thermal and/or electrical contact between the quantum processor 10 and the one or multiple housing elements 14 without causing mechanical stress in the quantum processor 10 and the housing 16 due to different shrinking rates of the quantum processor 10 and the one or multiple housing elements 14.

The filler material can function as an adhesive between the housing elements of the housing structure and the quantum computing processor. Furthermore, the filler material can serve to keep the alignment between the housing and the quantum computing processor in place.

The filler material 13 is conductive in such a way that it allows for the transfer of heat and/or the transfer of electricity between the processor 10 and the housing structure 16. The filler material 13 can for example ground the quantum processor 10. It is beneficial if the filler material is superconductive.

The filler material may comprise a metal, preferably indium, gallium, or alloys thereof. Indium lends itself as a solder due to its characteristic ability to wet most materials, i.e., its property of spreading and adhering to the surface of certain materials. A filler material comprising indium is thus preferred.

The aforementioned filler material 13 differentiates itself from paste(s) sometimes used in 2D quantum architectures in the state of the art, since a paste is characterized as a thick, soft, and moist substance typically produced by mixing dry ingredients with a liquid.

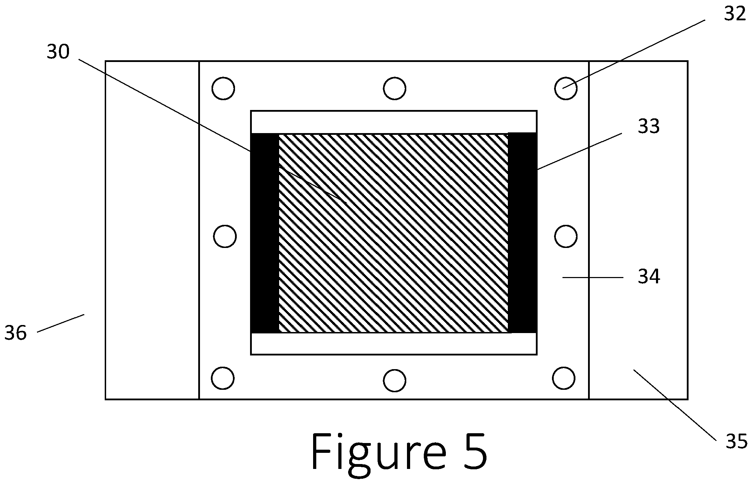

FIG. 5 is a schematic diagram showing the top view of the housing structure for the quantum computing processor. The quantum processor 30 is present in the housing structure 36, similar to the embodiments described with respect to FIGS. 3A-3B and 4A-4B. Top screws 32 used to hold multiple housing elements 34 together are shown, which reach through the stack of housing elements. The base plane 35 is placed at the bottom of the housing structure in order to close off the housing structure at the bottom. The base plane 35 may protrude from the rest of the housing structure such as to simplify the connection of the base plane 35 to other components, e.g., to structures in the cryogenic freezer.

In this example, the quantum processor 30 is enclosed at two sides by the filler material 33, but embodiments where 30 is enclosed at three or more sides by the filler material 33 are also possible. Increasing the contact area between the quantum processor 30 and the filler material 33 will increase the capacity of the filler material 33 to aid in the mechanical and thermal stability of the housing structure and the quantum computing processor.

The filler material can reach along an entire side face of the 3D quantum processor or can form a line at a certain height of the side face. Non-connected shapes can also be formed by the connection surfaces between the filler material 33 and the quantum processor's side faces. For example, multiple lines, dots, squares, rectangles or other shapes can be formed by the connection surfaces between the filler material and the quantum processor's side faces. It is enough for the quantum processor to at least be partly enclosed by the filler material.

In order for the filler material to connect with the quantum computing processor, the filler material can be formed into its final shape and thus fill the cavity at least partially. Extruding the filler material makes sure that one can form the filler material, for example indium, in a controlled manner. Using extrusion, one can predict very well where the filler material will be formed after extrusion based on the location of the filler material prior to extrusion. Of course, other suitable methods can be used to form the filler material. This control is necessary for example when the quantum processor is positioned in the cavity during the extrusion process. The one or multiple housing elements can form or define at least one extrusion port, for example via a ridge defined in a housing element or via the space in between two housing elements, from which the filler material is extruded.

An exemplary method to extrude the filler material is schematically shown in FIG. 3A. Preferably, the filler material 13 is extruded by, in a first step, applying the filler material at least partially within or between the one or multiple housing elements, and, in a second step, by fastening one or multiple fixation elements, such as threads and/or screws, of the one or multiple housing elements.

In the case of FIG. 3A the filler material 13 is extruded by the fastening of the vertical screws 12, which presses together (indicated by downward facing arrows) the one or multiple housing elements 14 allowing for the extrusion of the filler material 13. This second step extrudes the filler material from within or between the one or multiple housing elements, and forms the filler material in such a way that it reaches from the housing structure 16 to the quantum processor 10. The filler material can be formed in small ridges formed in between edges of two housing elements. The filler material can also be present as an in-between layer between two housing elements. In all instances, the downward force on the housing elements extrudes the filler material 13 outwards towards the 3D quantum computing processor processor 10.

In this way, the filler material effectively bridges the empty space in the cavity between the housing structure 16 and the quantum processor 10. To optimally perform this process, it is advantageous to have the quantum processor inside the cavity before the extrusion steps are performed.

Extruding the filler material instead of applying it in other possible ways has the benefit of a high degree of control as mentioned above. More control in turn leads to an optimal contact between the housing structure 16 and the filler material 13 and the filler material 13 and the quantum processor 10.

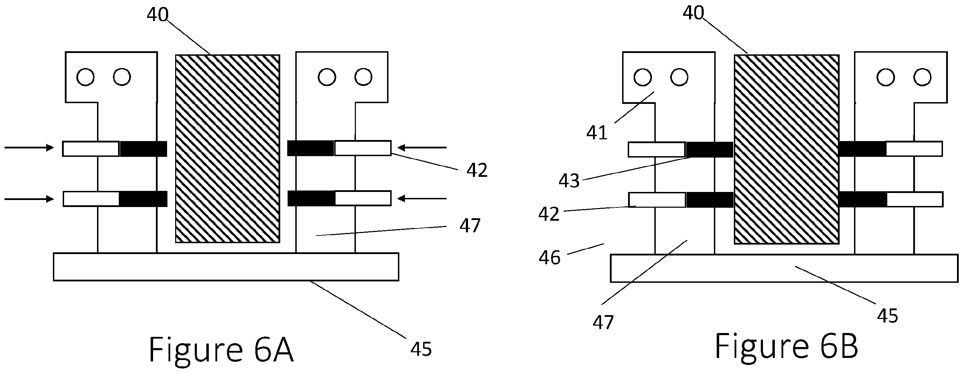

FIG. 6B is a schematic diagram showing a cross-sectional side view of a housing structure for a quantum computing processor, similar to FIG. 3B. In the embodiment of FIG. 6B, the quantum processor 40 is present in a housing structure 46. On the side of the one or multiple housing elements 44, fixation elements, specifically screws 42, are present that allow for the extrusion of the filler material 43 to the inside of the opening.

FIG. 6A shows the extrusion process of the filler material 43 using the horizontal screws. The horizontal screws 42 can be fastened (indicated by the arrows) to extrude the filler material 13 that was placed at least partially within or between the one or multiple housing elements prior to the fastening of the screws. The extrusion occurs in such a way that the filler material 43 at least partially fills the opening and connects the quantum processor 40 and the multiple housing elements 44 mechanically, thermally, and/or electrically. This method of extrusion allows the filler material to be extruded from in between the housing elements, even if the housing elements forming the side walls of the cavity are formed from a singular, integral piece.

In the above examples, the housing structure houses a single quantum processor. However, the housing structure can be used to house larger modular quantum processors, i.e., larger quantum processors that comprise multiple quantum processor units.

Multiple housing structures can be connected to each other, and can share edges. For example, a single housing structure could form (part of) multiple cavities. One or multiple quantum processors can in this way be formed within the sample holder 50 of the fridge.

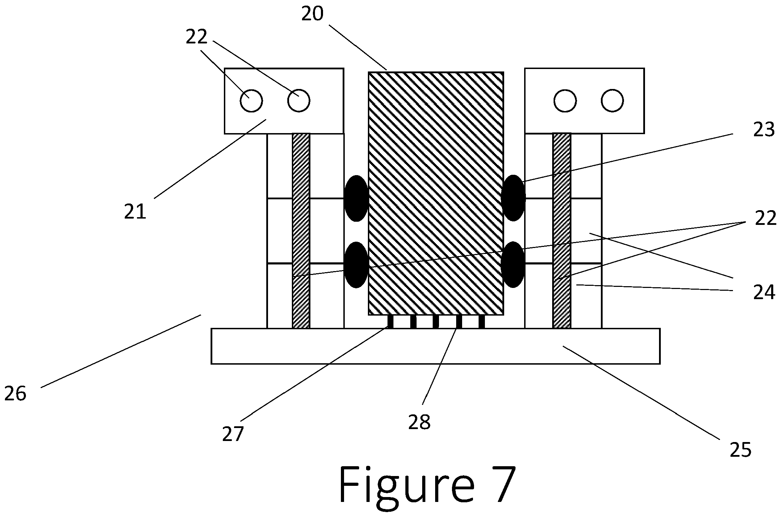

FIG. 7 is a schematic diagram showing a cross-sectional side view of housing structure for a quantum computing processor, similar to the embodiment explained with respect to FIG. 3B. Similar elements are not expressly mentioned.

The base plane 25 is configured in such a way that when the quantum processor 20 is received in the cavity, the base plane 25 is able to be mechanically, electrically and/or thermally connected to the quantum processor 20 through one or multiple connection elements 27,28. These connection elements 27,28 are electrically and/or thermally conductive. In this specific embodiment the connection elements are fuzz buttons 27 and/or springs 28.

Any of the embodiments disclosed above may be combined in any appropriate manner.

## Claims

1. A housing structure for a 3D quantum computing processor, comprising:
one or multiple housing elements, wherein the one or multiple housing elements are made from a conductive material which is substantially rigid, wherein the one or multiple housing elements form a cavity able to receive the 3D quantum computing processor;
a filler material, applied to the one or multiple housing elements, wherein the filler material is made from a conductive material which is solid and deformable at all operating temperatures of the 3D quantum computing processor, this being a temperature range ranging from cryogenic temperatures to at least room temperature;
wherein the filler material is able to at least partially fill the cavity, preferably by extrusion, and wherein the filler material is thus able to mechanically connect the one or multiple housing elements with the 3D quantum computing processor.

2. The housing structure of claim 1, wherein the filler material is deformable in such a way that the filler material remains solid, but is able to relieve mechanical stress through plastic deformation without fracturing, and/or wherein the conductive material out of which the one or multiple housing elements and/or the filler material is made is thermally and/or electrically conductive.

3. The housing structure of claim 1 or 2, wherein the filler material is deformable at all operating temperatures of the housing structure, this being a temperature range ranging from cryogenic temperatures to at least room temperature, and/or wherein the filler material functions as a solder between the housing elements of the housing structure and the 3D quantum computing processor, and/or wherein the filler material mechanically supports the 3D quantum processor when it is positioned in the housing structure, and/or wherein the filler material prevents misalignment between the one or multiple housing elements and the 3D quantum computing processor by keeping their relative positions substantially constant during heating up or cooling down.

4. The housing structure of any of the preceding claims, wherein the filler material comprises a metal, preferably indium, gallium, or alloys thereof; and/or wherein the filler material is deformable such that when the housing elements expand or contract when changing the operating temperature the 3D quantum computing processor remains connected to the one or multiple housing elements via the filler material and/or wherein the filler material is deformable such that the filler material keeps mechanical contact between the 3D quantum computing processor and the one or multiple housing elements without causing mechanical stress in the 3D quantum computing processor and the housing due to different shrinking rates of the 3D quantum computing processor and the one or multiple housing elements.

5. The housing structure of any of the preceding claims, wherein when the 3D quantum computing processor is received in the cavity, the space between the one or multiple housing elements and the 3D quantum computing processor is at least partially filled with the filler material, such that the filler material connects the 3D quantum computing processor and the one or multiple housing elements mechanically, thermally, and/or electrically.

6. The housing structure of any of the preceding claims wherein the material from which the one or multiple housing elements are made comprises a metal, preferably copper or silver; and preferably:
wherein the one or multiple housing elements are treated to improve properties, preferably conductivity or protection from oxidation, for example by coating the metallic material with gold.

7. The housing structure of any of the preceding claims, wherein the one or multiple housing elements form at least one extrusion port, from which the filler material is extruded; and/or
wherein the filler material is extruded such as to at least partially fill the cavity, preferably where the filler material is extruded by, in a first step, applying the filler material at least partially within or between the one or multiple housing elements, and, in a second step, by fastening one or multiple fixation elements, such as threads and/or screws, of the one or multiple housing elements; preferably wherein the filler material is provided in recesses in the side of the housing enclosure and is subsequently extruded from these recesses during assembly of the housing structure by the usage of the fixation elements which are inserted into the side of the housing enclosure.

8. The housing structure of any of the preceding claims, further comprising a base plane, wherein the base plane is configured in such a way that when the 3D quantum computing processor is received in the cavity, the base plane is able to be mechanically, electrically and/or thermally connect to the 3D quantum computing processor through one or multiple connection elements, and/or wherein the connection elements are electrically and/or thermally conductive, preferably wherein the connection elements are fuzz buttons and/or springs, more preferably wherein the connection elements are made from a deformable material.

9. The housing structure of claim 8, wherein the base plane is made of a conductive material and is substantially rigid, and/or wherein the base plane comprises ridges wherein a seam is formed using a separate conductive material, preferably indium, such as to obtain a seam between the base plane and the one or multiple housing elements which is electromagnetically tight and/or able to release thermal stress.

10. The housing structure of any of the preceding claims, wherein the housing structure comprises a layer stack of multiple housing elements, and filler material, preferably wherein the housing elements and the filler material in the layer stack alternate; and preferably:
wherein the filler material of the layer stack is extruded material, wherein the material is extruded by pressing the layer stack together, more preferably wherein the housing elements of the layer stack are pressed together by fixation elements, such as threads and/or screws.

11. The housing structure of any of the preceding claims, further comprising bendable elements, preferably wherein the bendable elements are protruding from the one or multiple housing elements, that connect mechanically, thermally and/or electrically to wave guides, such as a PCB, a flex PCB or flex cables, used to connect the 3D quantum computing processor to the up-chain components of the quantum computer.

12. The housing structure of any of the preceding claims, wherein the housing structure is configured to electromagnetically shield the 3D quantum computing processor received therein, preferably wherein the housing structure acts as a Faraday cage, and/or wherein the housing structure is configured to thermally connect the 3D quantum computing processor received therein to a cryostat.

13. A 3D quantum computing processor system, comprising the housing structure of any of the preceding claims and a 3D quantum computing processor received in the cavity of the housing structure.

14. A method for assembling a housing structure for a 3D quantum computing processor, comprising:
providing one or multiple housing elements, wherein the one or multiple housing elements are made from a conductive material which is substantially rigid;
providing a filler material, and applying the filler material to the one or multiple housing elements such that the filler material is provided at least partially within or between the one or multiple housing elements, wherein the filler material is made from a conductive material which is deformable at all operating temperatures of the 3D quantum computing processor, this being a temperature range ranging from cryogenic temperatures to at least room temperature;
extruding the filler material from the one or multiple housing elements, preferably by using fixation elements;
wherein the one or multiple housing elements form a cavity able to receive the 3D quantum computing processor and wherein the filler material at least partly fills the cavity once extruded and is thus able to connect the 3D quantum computing processor with the one or multiple housing elements.

15. The method of claim 14, wherein the filler material is provided in recesses in the side of the housing enclosure and is subsequently extruded from these recesses during assembly of the housing structure by the usage of the fixation elements which are inserted into the side of the housing enclosure; and/or
wherein the housing structure comprises a layer stack of multiple housing elements and filler material and wherein the filler material is extruded by pressing the layer stack together, preferably by fastening the fixation elements that press the housing elements together; and/or
wherein the method further comprises providing a base plane and connecting the one or multiple housing elements to the base plane.
